# EUROPÄISCHE PATENTSCHRIFT

(11) **EP 3 374 235 B1**
(45) Veröffentlichungstag und Bekanntmachung des Hinweises auf die Patenterteilung: **06.11.2019**
(21) Anmeldenummer: 16763802.2
(22) Anmeldetag: 09.09.2016
(51) Int. Cl.: B60R 19/48, G10K 9/122, G01S 15/93

(54) **AKUSTISCHER SENSOR ZUM AUSSENDEN UND/ODER EMPFANGEN VON AKUSTISCHEN SIGNALEN**
ACOUSTIC SENSOR FOR TRANSMITTING AND/OR RECEIVING ACOUSTIC SIGNALS
SONDE ACOUSTIQUE POUR L'ÉMISSION ET/OU LA RÉCEPTION DE SIGNAUX ACOUSTIQUES

(30) Priorität: 13.11.2015 DE 102015222465
(43) Veröffentlichungstag der Anmeldung: 19.09.2018
(73) Patentinhaber: Robert Bosch GmbH, 70442 Stuttgart (DE)
(72) Erfinder: KARL, Matthias, 76275 Ettlingen (DE)
(86) Internationale Anmeldenummer: PCT/EP2016/071312
(87) Internationale Veröffentlichungsnummer: WO 2017/080700

(56) Entgegenhaltungen:
- DE-A1- 3 823 477
- DE-A1- 4 114 180
- DE-A1-102005 046 173
- DE-A1-102010 005 654
- US-A- 5 316 831
- US-A1- 2008 089 177
- US-A1- 2009 195 123

## Beschreibung

### Stand der Technik

Heutzutage werden Ultraschallsensoren zur Erfassung von Objekten in einer Fahrzeugumgebung eingesetzt. In solchen Ultraschallsensoren ist ein elektroakustischer Wandler mittels angeschweißter oder angelöteter elektrischer Verbindungsleitungen kontaktiert. Die elektrischen Verbindungsleitungen enden andererseits an sogenannten Kontaktträgern.

Der Ultraschallsensor erhält seine mechanische Stabilität mittels eines Gehäuses das üblicher Weise aus Kunststoff gefertigt ist. Innerhalb dieses Gehäuses ist eine Leiterplatte, welche zum Teil mit elektronischen Bauelementen bestückt ist, eingebaut. Dabei ist die Leiterplatte üblicherweise mit den Kontaktträgern verbunden.

Dabei wird eine Membran des Ultraschallsensors von einer zugehörigen weiteren Gehäusekomponente, dem Membrantopf, aufgespannt. Üblicher Weise wird dabei die Membran durch Umformen, wie Tiefziehen, zusammen mit dieser weiteren Gehäusekomponente aus einem Aluminiumblock gefertigt. Dieser Membrantopf wird häufig mittels einer dritten akustisch entkoppelnden Gehäusekomponente mit dem erstgenannten Gehäuse verbunden. Auf die Membran ist der elektroakustische Wandler geklebt und beispielsweise über TKS-Schweißdrähte mit dem Kontaktträger und dieser wiederum mit der in dem Gehäuse angeordneten Leiterplatte verbunden. Die Membran ist dabei oftmals ein Abschnitt eines sogenannten Membrantopfes. In diesem Falle ist die Wand des Membrantopfes formbestimmend für die Membran.

Das Dokument DE 10 2010 005654 A1 zeigt eine Signalgebereinrichtung mit einem elektrischen akustischen Signalgeber, der eine Piezokeramikscheibe auf einer Metallmembran aufweist.

### Offenbarung der Erfindung

Der erfindungsgemäße akustische Sensor zum Aussenden und/oder Empfangen von Schallsignalen umfasst eine Membran, einen elektroakustischen Wandler, der dazu eingerichtet ist, die Membran zu einer Schwingung anzuregen, und einen Leitungsträger, auf dessen Oberfläche zumindest eine elektrische Leiterbahn angeordnet ist, wobei die Membran an zumindest zwei Verbindungspunkten mit dem Leitungsträger verbunden ist und von dem Leitungsträger aufgespannt ist. Der akustische Sensor ist dabei insbesondere zur Umfeldvermessung in der Umgebung eines Fahrzeugs geeignet.

Die Membran ist dabei ein Element, welches eine höhere Flexibilität als der Leitungsträger aufweist und von der die akustischen Signale, die durch den elektroakustischen Wandler angeregt wurden, ausgesandt werden. Analog werden von der Membran in einem Empfangsfall die aus dem Umfeld aufgenommenen akustischen Signale an den elektroakustischen Wandler geleitet. Der Leitungsträger ist somit gegenüber der Membran biegestarr. Ein elektroakustischer Wandler ist jegliches Bauelement, welches durch ein Anlegen eines elektrischen Signals zu einer mechanischen Schwingung oder Bewegung angeregt werden kann. Der Leitungsträger ist insbesondere eine Leiterplatte. Eine elektrische Leiterbahn ist ein elektrischer Leiter, welcher insbesondere ein Breiten-/Höhenverhältnis von größer 3 und insbesondere von größer 5 aufweist. Die elektrische Leiterbahn wird von dem Leitungsträger getragen, also von dem Leitungsträger mechanisch stabilisiert. Die Membran wird von dem Leitungsträger aufgespannt. Das bedeutet, dass die Membran durch die Verbindungspunkte in einer Position und in einem Zustand gehalten wird, in dem diese durch den elektroakustischen Wandler zu einer Schwingung angeregt werden kann. So sind die Verbindungspunkte bevorzugt so gewählt, dass die Membran in einem Ruhezustand zumindest teilweise flächig gespannt ist. Gespannt bedeutet dabei, dass zumindest bei einer Anregung der Membran eine Kraft auf die Randbereiche der Membran ausgeübt wird.

Es wird somit ein akustischer Sensor geschaffen, der besonders preisgünstig hergestellt werden kann, da in diesem die Membran von einem Leitungsträger aufgespannt wird und kein zusätzliches Element zum Aufspannen der Membran, insbesondere kein Gehäuse, notwendig ist. Der Leitungsträger übernimmt somit eine Doppelfunktion, da dieser gleichzeitig dazu geeignet ist, elektrische Komponenten und/oder Leiter des akustischen Sensors zu tragen, als auch dazu geeignet ist, dem akustischen Sensor seine Stabilität zu geben. Gleichzeitig wird eine Anzahl von notwendigen Bauelementen reduziert und eine besonders platzsparende Gestaltung des akustischen Sensors ermöglicht. Durch die verringerte Anzahl an Bauelementen wird zudem eine Fertigung des akustischen Sensors vereinfacht.

Die Unteransprüche zeigen bevorzugte Weiterbildungen der Erfindung.

Erfindungsgemäß besteht der Leitungsträger zumindest abschnittsweise aus einem elektrisch leitenden Material, wobei zwischen der zumindest einen elektrischen Leiterbahn und dem elektrisch leitfähigen Material des Leitungsträgers eine Isolationsschicht angeordnet ist. Insbesondere ist der Leitungsträger eine Metallkernleiterplatte. Mit anderen Worten ist es vorteilhaft, wenn der Leitungsträger einen stabilisierenden Kern aufweist. Somit wird eine hohe Steifigkeit des Leitungsträgers erreicht, wodurch dem akustischen Sensor eine hohe Stabilität gegeben wird und ungewollte Schwingungen des Schallsensors abseits der Membran werden unterbunden. In einer nicht beanspruchten Alternative kann der Leitungsträger auch durch andere dem Fachmann bekannte Mittel eine hohe Steifigkeit bekommen, beispielsweise indem der Leitungsträger aus faserverstärktem Kunststoff in einer Dicke über 1,5 mm insbesondere über 2 mm gefertigt wird.

Auch ist es vorteilhaft, wenn der akustische Sensor dazu eingerichtet ist, über den Leitungsträger an einer Fahrzeugkomponente fixiert zu werden. Insbesondere weist der Leitungsträger dazu einen Bereich auf, der mit der Fahrzeugkomponente gekoppelt wird. Dieser Bereich umfasst bevorzugt ein Verbindungselement, beispielsweise eine Lasche, einen Zapfen, einen Haken, eine Rastnase oder eine Aufnahme. Auf diese Weise wird eine besonders stabile Verbindung zwischen dem akustischen Sensor und der Fahrzeugkomponente geschaffen.

Auch ist es vorteilhaft, wenn die Membran über ein Dichtungselement mit dem Leitungsträger verbunden ist. Ein Dichtungselement ist ein Element, welches bevorzugt eine höhere Elastizität als der Leitungsträger aufweist. Auf diese Weise wird sichergestellt, dass keine Fremdkörper, wie beispielsweise Verschmutzungen, in den Bereich zwischen der Membran und den Leitungsträger eindringen können. Gleichzeitig wird eine Schwingfähigkeit der Membran verbessert. Außerdem wird ein Abstand zwischen der Membran und dem Leitungsträger geschaffen, wodurch eine Bewegungsfreiheit der Membran verbessert wird.

Ebenso vorteilhaft ist es, wenn der Leitungsträger in einem Bereich, in dem der elektroakustische Wandler über dem Leitungsträger angeordnet ist, eine Senke oder eine Durchgangsöffnung aufweist. Auf diese Weise wird eine Dämpfung der Membran bei einem Schwingen minimiert und/oder der rückwärtig von der Membran ausgehende Schall in geeigneter Weise geformt so dass beispielsweise der Wirkungsgrad erhöht werden kann. Insbesondere bei einer Durchgangsöffnung wird zudem vermieden, dass Schallreflektionen Einfluss auf die Schwingung der Membran nehmen.

Ferner ist es vorteilhaft, wenn der elektroakustische Wandler über die zumindest eine elektrische Leiterbahn elektrisch kontaktiert ist. Somit wird eine ortsnahe Anordnung einer Elektronik, welche zur Anregung des elektroakustischen Wandlers benötigt wird, an dem elektroakustischen Wandler ermöglicht.

Auch ist es vorteilhaft, wenn die Membran einen Oberflächenbereich aufweist, der elektrisch leitfähig ist und der elektroakustische Wandler über den elektrisch leitfähigen Oberflächenbereich der Membran kontaktiert ist. Auf diese Weise wird eine besonders einfache Kontaktierung des elektroakustischen Wandlers ermöglicht. Diese ist besonders robust gegenüber mechanischen Einflüssen, welche insbesondere zu fehlerhaften Kontaktierungen bei langer Nutzungsdauer des akustischen Sensors führen können.

Es ist ebenfalls vorteilhaft, wenn der elektrisch leitfähige Oberflächenbereich der Membran über einen der Verbindungspunkte elektrisch kontaktiert ist. Somit wird der Verbindungspunkt sowohl zum Aufspannen der Membran als auch zum Kontaktieren der Membran genutzt, wodurch eine zusätzliche Kontaktierung entfällt.

Auch ist es vorteilhaft, wenn der elektroakustische Wandler direkt mit der zumindest einen elektrischen Leiterbahn verbunden ist. Es wird somit eine besonders einfache Kontaktierung des elektroakustischen Wandlers geschaffen, wobei der elektroakustische Wandler gleichzeitig durch den Leitungsträger in Position gehalten wird, wodurch optional eine Befestigung des elektroakustischen Wandlers an der Membran entfällt.

Auch ist es vorteilhaft, wenn auf einer Oberfläche des Leitungsträgers, die abseits der Membran liegt, eine Dämmschicht aufgebracht ist. Die Dämmschicht liegt insbesondere neben der Membran. Insbesondere umgibt die Dämmschicht die Membran bezüglich der Abstrahlrichtung der Membran. Eine Dämmschicht ist eine Schicht aus einem elastischen Material. Die Dämmschicht ist dabei bevorzugt so angeordnet, dass diese zwischen dem Leitungsträger und der Innenseite einer Fahrzeugkomponente, wie beispielsweise einer Fahrzeugverkleidung, angeordnet ist, wenn der akustische Sensor an der Fahrzeugkomponente befestigt wird. Auf diese Weise kann eine Abdichtung des akustischen Sensors erfolgen. Zudem wird dabei eine Übertragung von Vibrationen zwischen dem akustischen Sensor und der Fahrzeugkomponente minimiert und/oder eine Schallausbreitung parallel zur Oberflächenausrichtung der Fahrzeugkomponente vermieden.

Der Schallsensor ist bevorzugt ein Ultraschallsensor, der zur Erfassung einer Fahrzeugumgebung geeignet ist. Insbesondere ist der Ultraschallsensor dazu geeignet, Ultraschallsignale in eine gasförmige Umgebung abzugeben.

### Kurze Beschreibung der Zeichnungen

Nachfolgend werden Ausführungsbeispiele der Erfindung unter Bezugnahme auf die begleitenden Zeichnungen im Detail beschrieben. In der Zeichnung ist:
- Figur 1: ein akustischer Sensor zum Aussenden und/oder Empfangen von akustischen Signalen gemäß einer ersten Ausführungsform der Erfindung,
- Figur 2: ein akustischer Sensor zum Aussenden und/oder Empfangen von akustischen Signalen gemäß einer zweiten Ausführungsform der Erfindung,
- Figur 3: ein akustischer Sensor zum Aussenden und/oder Empfangen von akustischen Signalen gemäß einer dritten Ausführungsform der Erfindung,
- Figur 4: ein akustischer Sensor zum Aussenden und/oder Empfangen von akustischen Signalen gemäß einer vierten Ausführungsform der Erfindung,
- Figur 5: ein akustischer Sensor zum Aussenden und/oder Empfangen von akustischen Signalen gemäß einer fünften Ausführungsform der Erfindung, und
- Figur 6: ein Sensor zum Aussenden und/oder Empfangen von akustischen Signalen gemäß einer sechsten Ausführungsform der Erfindung.

### Ausführungsformen der Erfindung

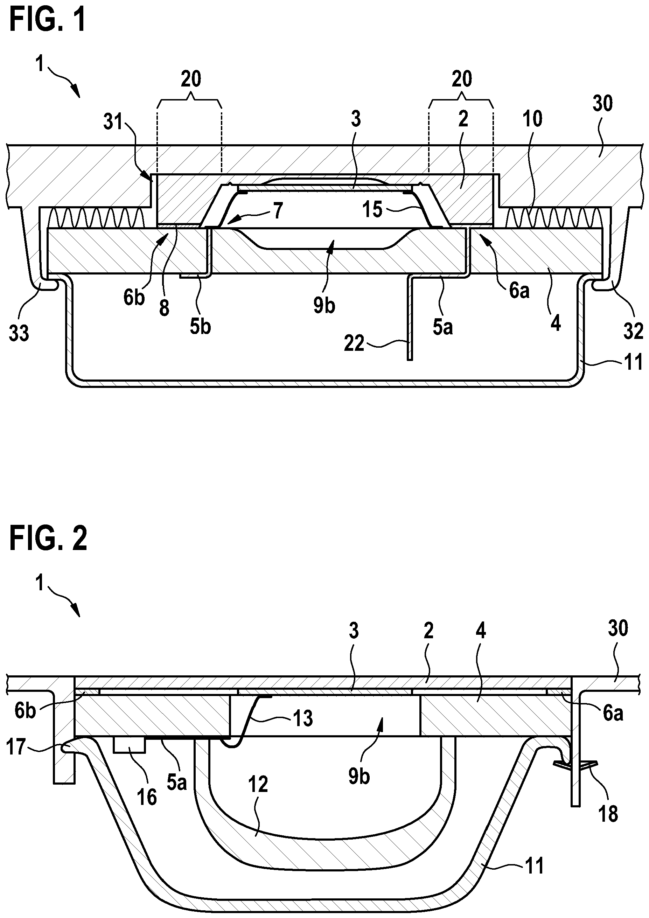

Figur 1 zeigt einen akustischen Sensor 1 zum Aussenden und/oder Empfangen von akustischen Signalen gemäß einer ersten Ausführungsform der Erfindung. Es ist dabei ein Querschnitt durch den akustischen Sensor 1 und seiner Verbauumgebung gezeigt. Der akustische Sensor 1 ist in dieser ersten Ausführungsform beispielhaft an einer Fahrzeugkomponente 30, beispielsweise einer Fahrzeugverkleidung, befestigt. Die Fahrzeugkomponente 30 weist dafür eine Ausnehmung 31 auf, die ausreichend dimensioniert ist, um die Membran 2 in Ihrem Umfang aufzunehmen. Dabei ist es vorteilhaft, dass die Membran 2 in engem mechanischen Kontakt mit der Ausnehmung 31 der Fahrzeugkomponente 30 ist.

Der akustische Sensor 1 umfasst als wesentliche Komponenten eine Membran 2, einen elektroakustischen Wandler 3 und einen Leitungsträger 4. Auf dem Leitungsträger 4 ist eine erste elektrische Leiterbahn 5a und eine demgegenüber elektrisch isolierte zweite elektrische Leiterbahn 5b angeordnet. Der Leitungsträger ist bevorzugt flächig ausgeführt und weist bevorzugt eine Dicke von größer als 1,5 mm, insbesondere größer als 2 mm auf.

Auf einer ersten Seite des Leitungsträgers 4 ist die Membran 2 angeordnet. Die Membran 2 weist in dieser ersten Ausführungsform an ihrem Rand einen Randbereich 20 auf, der eine größere Dicke aufweist, als eine Dicke der Membran 2 in ihrem Zentrum. Daher ist der Bereich im Zentrum der Membran 2 gegenüber der Oberfläche des Leitungsträgers 4 beabstandet und ragt soweit in die Ausnehmung 31 hinein, dass die Membran 2 an der Oberfläche der Ausnehmung 31 der Fahrzeugkomponente 30 anliegt. Insbesondere liegt der Randbereich 20 der Membran 2 an der Oberfläche der Ausnehmung 31 an. Darüber hinaus schafft der verdickte Randbereich 20 einen stabilisierenden Rahmen und begrenzt den schwingenden Bereich der Membran sowohl für den schwingenden Bereich der Membran 2 als auch für die entsprechende Ausnehmung 31 der Fahrzeugkomponente 30. Der Randbereich 20 der Membran 2 liegt andererseits auf dem Leitungsträger 4 auf. Dabei ist der Randbereich 20 dort, wo dieser auf dem Leitungsträger 4 aufliegt, mit dem Leitungsträger 4 mechanisch verbunden, beispielsweise verklebt, verlötet oder/und verschweißt. Die Membran ist somit in ihrem Randbereich 20 mit dem Leitungsträger 4 mechanisch verbunden.

In einer bevorzugten Ausprägung der ersten Ausführungsform ist die Membran 2 zumindest abschnittsweise elektrisch leitfähig und der Leitungsträger 4 trägt an der Verbindungsstelle zur Auflagefläche der Membran 2 ein Kontaktmaterial, insbesondere mindestens eine Leiterbahn, beispielsweise die erste oder die zweite Leiterbahn 5a, 5b, und die Membran 2 ist an dieser Stelle auch elektrisch mit dem Leitungsträger 4 kontaktiert. Somit ist die Membran 2 an einer Vielzahl von Verbindungspunkten 6a, 6b mit dem Leitungsträger 4 sowohl mechanisch als auch elektrisch verbunden. Da die die Membran 2 zumindest abschnittsweise elektrisch leitfähig ist, weist diese einen Oberflächenbereich auf, der elektrisch leitfähig ist. Der elektroakustische Wandler 3 wird somit über den elektrisch leitfähigen Oberflächenbereich der Membran 2 kontaktiert, wobei der elektrisch leitfähige Oberflächenbereich der Membran 2 über zumindest einen der Verbindungspunkte 6a, 6b kontaktiert ist.

Auf der dem Leitungsträger 4 zugewandten Seite der Membran 2 ist der elektroakustische Wandler 3 angeordnet. Der elektroakustische Wandler 3 wandelt bei einem Sendevorgang des akustischen Sensors 1 elektrische Wechselspannungssignale, die an seinen elektrischen Kontakten angelegt sind, in mechanische Bewegungen, um die Membran 2 zu einer Schwingung anzuregen. Umgekehrt werden beim Empfangen akustischer Signale mechanische Schwingungen an der Membran 2 durch die mechanische Kopplung des elektroakustischen Wandlers 3 an die Membran 2 in elektrische Signale gewandelt.

Der Elektro-Akustik-Wandler 3 ist bevorzugt ein piezoelektrischer Wandler, der die Form einer kreisrunden bzw. elliptischen Scheibe hat, wobei an jede der beiden gegenüberliegenden Scheibenflächen jeweils mindestens eine Plattenelektrode aufgebracht ist. Dargestellt ist der Querschnitt durch eine solche Scheibe. Im dargestellten Fall ist die der Membran 2 zugewandte Plattenelektrode via elektrisch leitendem Kleber an die elektrisch leitende Membran 2 und diese wiederum via elektrisch leitendem Kleber an die Verbindungspunkte 6a, 6b des Leitungsträgers mechanisch befestigt und elektrisch verbunden. In bevorzugter Ausprägung wirkt dieser Kleber darüber hinaus als ein Dichtungselement 8 und trägt durch elastische Eigenschaften zur schwingungsmäßigen Entkopplung des Randbereichs 20 der Membran 2 von dem Leitungsträger 4 bei.

In einer bevorzugten Ausprägung ist wie im dargestellten Fall die abseits der Membran 2 befindliche Plattenelektrode des elektroakustischen Wandlers 3 via einem kegelstumpfförmigen Federkontaktring mit mindestens einer und bevorzugt mehreren auf dem Umfang verteilten elektrisch leitenden Federkontaktzungen 15 kontaktiert. Andererseits ist der Federkontaktring mit mindestens einem Verbindungspunkt 6a, 6b auf dem Leitungsträger 4 zumindest elektrisch verbunden.

Durch die Verwendung von mindestens einem rückseitig an den elektroakustischen Wandler 3 drückenden Federkontakt 15 sorgt dieser nicht nur für die elektrische Kontaktierung mindestens einer Plattenelektrode des Elektro-Akustik-Wandlers 3 sondern auch für eine mechanische Vorspannung des inneren Bereichs der Membran abseits des Randbereichs 20. Dadurch kann sichergestellt werden, dass der innere Bereich der Membran 2 stets an der Innenseite der Ausnehmung 31 mechanisch anliegt.

In einer bevorzugten Ausprägung werden mehrere voneinander getrennte Elektrodenflächen des Elektro-Akustik-Wandlers jeweils mittels elektrisch getrennter Federkontakte kontaktiert. In einer weiteren bevorzugten Ausprägung wird zumindest eine zu kontaktierende Plattenelektrode mit mehr als einem Federkontakt elektrisch kontaktiert, um die Zuverlässigkeit der Kontaktierung zu erhöhen.

In bevorzugter Ausprägung werden die mit dem elektroakustischen Wandler 3 verbunden Leiterzüge 5a, 5b auf die der Membran 2 gegenüberliegenden Seite des Leiterträgers 4 geführt, bevorzugt mittels jeweils einer Durchkontaktierung, die dort mit weiteren Leiterzügen und optional dort befindlichen Bauelementen wie elektrische Bauelemente 16, Schaltkreise und/oder Steckkontakten 22 verbunden.

Der Leitungsträger 4 weist bevorzugt eine hohe mechanische Steifigkeit auf. Eine solche höhere Steifigkeit eines plattenförmigen Leitungsträgers wird beispielsweise durch Erhöhung der Plattendicke und/oder durch Verstärkung der Platte beispielsweise mittels Fasern oder/und Metallen erreicht. Der Leitungsträger 4 besteht zumindest abschnittsweise aus einem elektrisch leitenden Material, wobei zwischen der zumindest den elektrischen Leiterbahnen 5a, 5b und dem elektrisch leitenden Material des Leitungsträgers 4 eine Isolationsschicht angeordnet ist. In dieser ersten Ausführungsform ist der Leitungsträger 4 eine Metallkernleiterplatte. Der Leitungsträger 4 weist daher einen metallischen Kern auf, der mit einer Kunststoffschicht beschichtet ist, auf welcher die elektrischen Leiterbahnen 5a, 5b, der Kontaktpunkt 7 sowie die Durchkontaktierungen angeordnet sind. Der Kontaktpunkt 7 ist dabei ein Punkt auf der zweiten Leiterbahn 5b. Optional sind zusätzlich elektrische Bauelemente 16 auf dem Leitungsträger 4 angeordnet. Der Leitungsträger 4 weist in dieser ersten Ausführungsform eine im Wesentlichen plattenförmige Form auf.

In einem Bereich, in dem der elektroakustische Wandler 3 über dem Leitungsträger 4 angeordnet ist, weist der Leitungsträger 4 eine Senke 9 auf. Die Senke 9 ist ein Bereich, in dem eine Dicke des Leitungsträgers 4 verringert ist. Die Dicke des Leitungsträgers 4 ist ein Abstand zwischen der ersten Seite und der zweiten Seite des Leitungsträgers 4.

In der hier dargestellten Ausprägung enthält der Leitungsträger 4 auf der der Membran 2 entgegen gesetzten Seite des elektroakustischen Wandlers 3 gelegen Seite, eine Senke 9. Die Senke 9 ist somit ein Bereich, in dem ein Abstand zwischen dem elektroakustischen Wandler 3 bzw. der Membran 2 gegenüber der Oberfläche auf der ersten Seite des Leitungsträgers 4 gezielt verändert wird, insbesondere vergrößert ist. Somit werden Einflüsse von rückwärtig abgegebenen akustischen Signalen auf das Schwingverhalten der Membran 2 eingestellt, wie beispielsweise minimiert. In alternativen Ausführungsformen ist im Bereich dieser Senke ein Dämmmaterial angeordnet. Alternativ oder zusätzlich wird durch die Senke 9 ein Abstand zwischen der Membran 2 und dem Leitungsträger 4 derart gewählt, dass rückwärtig abgegebene akustische Signale sich positiv mit den in die entgegengesetzte Abstrahlrichtung abgegebenen Signale überlagern, so dass der Wirkungsgrad des elektroakustischen Wandlers 3 zumindest abschnittsweise erhöht wird.

In einer bevorzugten Ausprägung sind einige elektrische Potentiale der elektrisch leitfähigen Membran 2, des elektroakustischen Wandlers 3, und/oder des Leitungsträgers 4 miteinander elektrisch verbunden. So kann auf eine der Durchkontaktierungen und auf die der Durchkontaktierung zugehörige Leiterbahnen verzichtet werden, wenn eine Elektrode des elektroakustischen Wandlers 3 mit der elektrisch leitfähigen Membran 2 und diese wiederum mit dem Metallkern des Leitungsträgers 4 verbunden ist.

Der in Fig. 1 dargestellte Aufbau kann sich unter diesen Randbedingungen dahingehend vereinfachen, dass nur noch der bzw. die jeweiligen Kontakte der Federkontakte 15 auf die der Membran 2 abgewandten Seite des Leitungsträgers 4 elektrisch durchgeführt werden müssen. Dies kann beispielsweise dadurch realisiert werden, dass der oder die Federkontakte 15, statt der an den Verbindungspunkten 6a, 6b vorliegenden Leiterbahn, auf der der Membran 2 zugewandten Seite des Leitungsträgers 4 gegenüber dem elektrischen Potential des Leitungsträgers 4 isoliert werden und durch den Leitungsträger 4 auf die gegenüberliegende Seite durchgeführt werden. In einem solchen einfachen Fall trägt der Leitungsträger 4 das elektrische Potential, äquivalent des Leiters 5a und der Membran 2, und der mindestens eine durchgeführte Kontakt der Federkontakte 15 das Potential der zweiten Leiterbahn 5b.

Die eigentliche Grundfunktion des akustischen Sensors 1 befindet sich in dem Bereich innerhalb der im Leitungsträger 4 eingetragenen Strich-Punkt-Linien. Für den Verbau eines akustischen Sensors 1 hinter einer Fahrzeugkomponente 30 wird in der dargestellten Lösung darüber hinaus der erfindungsgemäße Grundgedanke, dass der Leitungsträger 4 die mechanische Stabilität des akustischen Sensors 1 bestimmt, dazu genutzt, Schallsignale, die sich entlang der Oberfläche der Fahrzeugkomponente 30 ausbreiten wollen, zu unterdrücken. Durch die Verlängerung des Leitungsträgers 4 über den die eigentliche Sensorgrundfunktion bestimmenden Bereich hinaus wird ein Bereich geschaffen, in dem der Leitungsträger 4 ein Dämmmaterial tragen kann, mit dem Schwingungen in der Fahrzeugkomponente 30 abseits des Verbauort des Sensors, wie beispielsweise abseits der Ausnehmung 31, dadurch unterdrückt werden, dass das Dämmmaterial via dem Leitungsträger 4 an die Rückseite der Fahrzeugkomponente 30 gedrückt wird. Auf der Oberfläche des Leitungsträgers 4, welcher auf Seiten der Membran 2 liegt, ist das Dämmmaterial als eine Dämmschicht 10 aufgebracht. Die Dämmschicht 10 ist dabei nur in dem Bereich auf der ersten Seite des Leitungsträgers 4 aufgebracht, der nicht von der Membran 2 bedeckt wird. Die Dämmschicht 10 umläuft somit die Membran 2. Die Dämmschicht 10 ist aus einem flexiblen und somit elastischen Material geformt.

Der dargestellte Bereich der Fahrzeugkomponente bildet einen Sensorhalter. In einer nicht dargestellten alternativen Ausprägung wird der Sensorhalter auf der Fahrzeugkomponente befestigt. An dem Sensorhalter der Fahrzeugkomponente 30 sind im dargestellten Beispiel dazu zumindest zwei federelastische Rastnasen 32, 33 befestigt. Wird der akustische Sensor 1 an der Fahrzeugkomponente 30 in die Rastnasen 32, 33 eingeführt, so umgreifen diese Rastnasen 32, 33 den Leitungsträger 4, wodurch dieser an der Fahrzeugkomponente 30 einrastet. Da jede der Rastnasen 32, 33 den Leitungsträger 4 umgreift, wird dieser somit zwischen der Fahrzeugkomponente 30 und den Rastnasen 32, 33 einklemmt. Somit wird der akustische Sensor 1 über den Leitungsträger 4 an der Fahrzeugkomponente 30 fixiert. Durch die elastische Dämmschicht 10 wird der akustische Sensor 1 zusätzlich gegen die Rastnasen 32, 33 gedrückt, und somit besonders effizient fixiert. Die Dämmung 10 weist zudem den Vorteil auf, dass durch die Membran 2 bzw. des elektroakustischen Wandler 3 in der Fahrzeugkomponente 30 und insbesondere in dem Bereich der Ausnehmung 31 beim Senden erzeugten Schwingungen sich in diesem Bereich nicht entlang der Fahrzeugkomponente 30 fortsetzen und somit ungewollte seitlich der als Koppelort dienenden Ausnehmung 31 abgestrahlte akustische Signale unterbindet.

Bei diesem Aufbau sorgt der entsprechend geeignet steife Leitungsträger 4 somit sowohl dafür, dass der Dämmstoff 10 ein seinem Verbauort ein Schwingen der Fahrzeugkomponente 30 verhindert, als auch dafür, dass die Fahrzeugkomponente 30 und insbesondere deren Ausnehmung 31, an dem Verbauort des Randbereichs 20 der Membran 2 durch entsprechend weitergeleiteter Andruckkraft fixiert ist als auch dafür, dass ein Innenbereich der Membran 2 via der Federkontakte 15 dauerhaft an der Fahrzeugkomponente 30 und insbesondere an deren Ausnehmung 31 mechanisch anliegt. Der Innenbereich der Membran 2 ist der Bereich, der zwischen den Randbereichen 20 liegt. Aufgrund seiner mechanischen Eigenschaften, wie insbesondere aufgrund seiner vergleichsweise geringen Materialstärke kann er leicht durch den elektroakustischen Wandler 3 zum Schwingen angeregt werden beziehungsweise können im Empfangsfall eintreffende akustische Signale vom Innenbereich der Membran 2 leicht an den elektroakustischen Wandler 3 weiter geleitet werden. Bevorzugt wird der Innenbereich der Membran 2 vom starren Randbereich 20 umschlossen.

In dieser ersten Ausführungsform ist zwischen den Rastnasen 32, 33 und dem Leitungsträger 4 ein Deckel 11 eingeklemmt, welcher die der Membran 2 abgewandte zweite Seite des Leitungsträgers 4 überspannt und somit eventuelle elektrische Komponenten, die auf dem Leitungsträger 4 angeordnet sind, schützt.

An den Verbindungspunkten 6a, 6b, ist die Membran 2 mit dem Leitungsträger 4 mit einem elastischen elektrisch leitfähigen Dichtmittel verklebt, welches als ein Dichtungselement 8 dient. Dabei wurde ein elastisches Material zur Verklebung genutzt, wodurch eine Weiterleitung von mechanischen Schwingungen der Membran 2 in den Leitungsträger 4 minimiert wird. Somit ist die Membran 2 über das Dichtungselement 8 mit dem Leitungsträger 4 verbunden.

In einer bevorzugten optionalen Ausprägung ist der Innenbereich der Membran 2 gegenüber dem Randbereich 20 der Membran 2 zusätzlich mittels einer umlaufenden Sicke akustisch entkoppelt. In einer weiteren optionalen bevorzugten Ausprägung weißt die Membran im Bereich des elektroakustischen Wandlers 3 eine Verjüngung auf, das heißt die Steifigkeit, die beispielsweise durch die Abstände der beiden Seiten des Membranmaterials bestimmt werden, wird mit geringer werdendem Abstand zur Membranmitte hin immer kleiner. Auf diese Weise wird die durch den elektroakustischen Wandler 3 beim Senden erzeugte mechanische Bewegung mit höherem Wirkungsgrad in einen schallabstrahlenden mechanischen Hub gewandelt.

Bevorzugt weist die Membran 2 eine rotationssymmetrische bzw. eine elliptische Form auf. Aber auch alternative beispielsweise eckige Membranformen an denen ein oder mehrere elektroakustische Wandlern 3 befestigt sind und die von dem Leitungsträger 4 getragen werden, sind erfindungsgemäß beinhaltet.

In alternativen Ausführungsformen der Erfindung ist der Deckel 11 mit dem Leitungsträger 4 verschweißt, verklebt, verlötet oder auf eine andere Weise an dem Leitungsträger 4 befestigt. In bevorzugter Ausprägung ist dabei der Deckel 11 zumindest abschnittsweise elektrisch leitend und mit einem elektrischen Potential auf dem Leitungsträger 4 elektrisch leitend verbunden, um das Einstrahlen störender elektrischer Felder zu verringern.

Alternativ zu dem Deckel 11 ist eine schützende Beschichtung auf allen Bauelementen aufgebracht, die auf der zweiten Seite des Leitungsträgers 4 angeordnet sind.

Figur 2 zeigt einen akustischen Schallsensor 1 zum Aussenden und/oder Empfangen von akustischen Signalen gemäß einer zweiten Ausführungsform der Erfindung. Die zweite Ausführungsform der Erfindung entspricht im Wesentlichen der ersten Ausführungsform der Erfindung. Jedoch ist die Membran 2 in dieser zweiten Ausführungsform als ein Element gleichbleibender Dicke gestaltet und die Membran 2 überspannt einseitig den gesamten Leitungsträger 4 auf dessen erster Seite. Die beiden Verbindungspunkte 6a, 6b sind dazu an einem Rand des Leitungsträgers 4 angeordnet. Die Dicke der Membran 2 ist geringer als eine Dicke des Leitungsträgers 4. Durch die hohe Steifigkeit des Leitungsträgers 4 erhält die Membran 2 via der Verbindungspunkte 6a, 6b an ihrem Randbereich 20 eine hohe Steifigkeit, wodurch ein hoher Wirkungsgrad möglich ist. Somit wird auch in dieser zweiten Ausführungsform die Membran 2 von dem Leitungsträger 4 aufgespannt.

In dieser zweiten Ausführungsform weist der Leitungsträger 4 anstelle der Senke 9a eine Durchgangsöffnung 9b auf.

In alternativen Ausführungsformen verläuft die erste elektrische Leiterbahn 5a zumindest abschnittsweise auf der ersten Seite des Leitungsträgers 4 und die Membran 2 ist an zumindest einen der Verbindungspunkte 6a, 6b direkt mit einer Leiterbahn, beispielsweise der zweiten elektrischen Leiterbahnen 5b, verbunden. Somit wird eine besonders bevorzugte Kontaktierung der Membran 2 ermöglicht.

Der akustische Sensor 1 gemäß der zweiten Ausführungsform der Erfindung umfasst zudem in einer bevorzugten Form ein Reflektorelement 12, welches auf der dem elektroakustischen Wandler entgegengesetzten Seite des Leitungsträgers 4 angeordnet ist. Das Reflektorelement 12 weist eine Kavität auf, und ist derart angeordnet, dass die Kavität die Durchgangsöffnung 9b überspannt. Durch eine entsprechende Ausformung der Kavität kann ein akustisches Signal, welches von der Membran 2 abgegeben wird, reflektiert werden und somit eine Abstrahlcharakteristik des akustischen Sensors 1 angepasst werden.

Bevorzugt wird der akustische Sensor 1 auf der der Membran entgegengesetzten Seite des Leitungsträgers 4 mit einem Deckel 11 abgedeckt. In einem Raum zwischen dem Reflektorelement 12 und dem Deckel 11 können zudem die elektrische Bauelemente 16 angeordnet sein, welche für eine Funktion des akustischen Sensors 1 wesentlich sind. Der elektroakustische Wandler 3 ist über einen Draht 13 mit der ersten elektrischen Leiterbahn 5a verbunden. Alternativ können auch mehrere Kontaktierungen des elektroakustischen Wandlers 3 ermöglicht werden, indem beispielsweise mehrere Drähte zu mehreren elektrischen Leiterbahnen geführt werden.

Figur 2 zeigt zudem alternative Befestigungsoptionen für den akustischen Sensor 1. Auf der in Figur 2 dargestellten linken Seite des akustischen Sensors 1 weist der Deckel 11 eine Rastnase 17 auf, die mit einem entsprechenden Gegenstück an der Fahrzeugkomponente 30 eingerastet werden kann. Auf der in Figur 2 rechts gezeigten Seite ist eine Ausformung des Deckels 11 gezeigt, an welchen der akustische Sensor 1 über einen Achsklemmring 18 bzw. eine Federscheibe mittels entsprechender Halterungsaufnahme an der Fahrzeugkomponente 30 befestigt werden kann. Dazu weist der Deckel 11 eine für einen Achsklemmring geeignete Auflagefläche auf. Es ist ersichtlich, dass die entsprechenden Elemente, an welchen der akustische Sensor 1 befestigt wird, auch durch den Leitungsträger 4 selbst ausgeformt sein können. Während die dargestellte Rastnasenform der Rastnase 17 sich bei durchgesteckten Sensoreinbauten, bei denen die Membran 2 durch eine Öffnung bis auf der Sichtseite der Fahrzeugkomponente 30 durchgesteckt wird, bewährt hat, eignet sich eine Befestigung mit beispielsweise einem Achsklemmring 18 bevorzugt dazu, den akustischen Sensor 1 abseits der Sichtseite an der Fahrzeugkomponente 30 zu fixieren, wie es beispielsweise beim verdeckten Verbau üblich ist. Durch die federnde Wirkung eines Achsklemmrings 18 und äquivalenter federnder mechanischer Bauelemente wird eine entsprechend gleichbleibende Andruckkraft ermöglicht. Zudem ist offensichtlich, dass damit einander benachbarte Sensorzellen des dargestellten Sensors leicht an der Fahrzeugverkleidung befestigt werden können.

In dieser zweiten Ausführungsform ist die Membran 2, beispielsweise wie ein Bauelement mittels SMD-Löten, auf den Leitungsträger 4, beispielsweise die zweite elektrische Leiterbahn 5b, aufgelötet. Durch eine Druckprüfung kann dabei überwacht werden, ob die Lötung und damit der Sensor dicht sind. Dies ist für eine Robustheit des akustischen Sensors 1 gegenüber Fremdstoffeindringen entscheidend.

Elektrische Leiterbahnen auf dem Leitungsträger 4 haben typischerweise eine Höhe von 35 µm. Eine Membran 2 des akustischen Ultraschallsensors 1 schwingt typischerweise mit einem Hub von ca. 2 µm. Auch bei einer Ausführung des akustischen Sensors 1, bei dem ein erheblich größerer Hub der Membranfläche ermöglicht wird, beispielsweise ein Hub von 20 µm, werden somit Kollisionen zwischen der Membran 2 und dem Leitungsträger 4 vermieden, wenn die Membran von der Oberfläche des Leitungsträgers durch eine typische Leiterbahn beabstandet ist. Hohlräume, welche auf Seiten des Leitungsträgers 4 der Membran 2 liegen, sind optional mit einem in Fig.2 nicht gezeigten Dämmstoff gefüllt, um ein Ausschwingen der Membran 2 zu begrenzen.

Somit hat ein derart aufgebauter Sensor eine erheblich geringere Bauhöhe. Der starre Leitungsträger 4 kombiniert die heute getrennt realisierten Funktionselemente, wie Kontaktträger, Gehäuse, Leiterplatte usw.. Dank eines separaten akustischen Bauelements, dem Reflektor 12, können durch die Wahl verschiedener Reflektorformen verschiedene Sensormerkmale erzeugt werden.

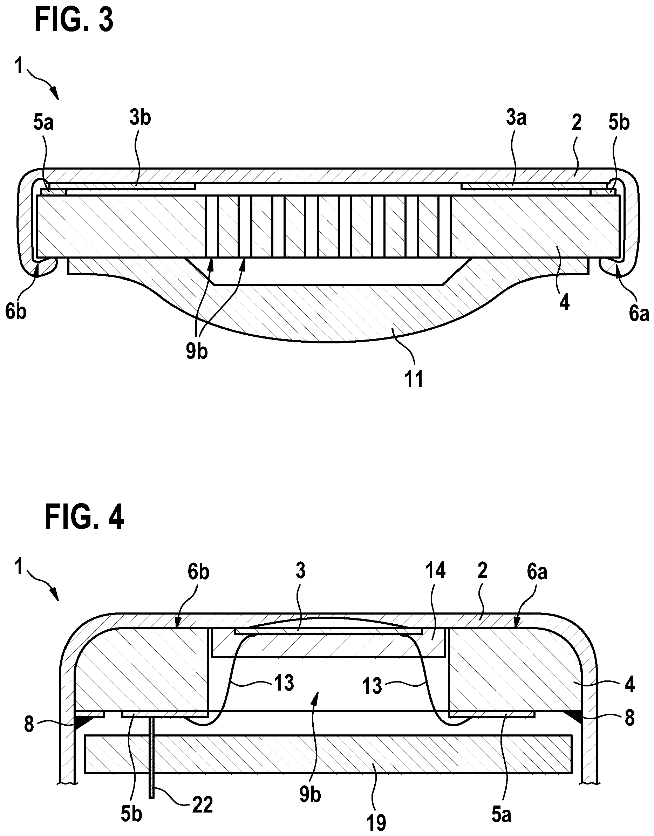

Figur 3 zeigt einen akustischen Sensor 1 zum Aussenden und/oder Empfangen von akustischen Signalen gemäß einer dritten Ausführungsform der Erfindung. Die dritte Ausführungsform der Erfindung entspricht im Wesentlichen der ersten und zweiten Ausführungsform der Erfindung. In dieser dritten Ausführungsform erstreckt sich die Membran 2 jedoch derart, dass diese sowohl die erste Seite des Leitungsträgers 4 überspannt als auch den Leitungsträger 4 seitlich umgreift. Dabei ist es vorteilhaft, wenn die Bereiche der Membran 2, welche den Leitungsträger 4 umgreifen, eine höhere Stabilität aufweisen, als der Bereich der Membran 2, welcher die eine Oberfläche des Leitungsträgers 4 überspannt. Es ist somit ersichtlich, dass die Verbindungspunkte 6a, 6b auch lösbare Verbindungspunkte sein können und die Membran 2 beispielsweise über eine Rastverbindung aufgespannt werden kann.

Der akustische Sensor 1 gemäß dieser dritten Ausführungsform der Erfindung weist beispielsweise zwei elektroakustische Wandler 3a, 3b auf. Alternativ sind 3a, 3b die beiden Schnitte eines einzelnen umlaufenden elektroakustischen Wandlers 3. Die elektroakustischen Wandler 3a, 3b liegen direkt auf jeweils einer Leiterbahn 5a, 5b auf. Die elektroakustischen Wandler 3a, 3b sind somit direkt mit diesen elektrischen Leiterbahnen 5a, 5b verbunden.

Der Deckel 11 ist direkt mit dem Leitungsträger 4 verbunden. In alternativen Ausführungsformen kann der Deckel 11 jedoch auch einstückig mit dem Leitungsträger 4 geformt sein.

Eine jeweils zweite Kontaktierung der elektroakustischen Wandler 3a, 3b erfolgt entweder über eine elektrisch leitfähige Membran gemäß der ersten oder zweiten Ausführungsform oder über eine elektrische Leiterbahn auf dem Leitungsträger 4.

In dieser dritten Ausführungsform sind in dem Bereich, in dem der elektroakustische Wandler 3 über dem Leitungsträger 4 angeordnet ist, mehrere Durchgangsöffnungen 9b angeordnet. Dadurch bekommt der Leitungsträger 4 und somit die Membran 2 eine größere Stabilität, als dies bei einer einzigen Durchgangsöffnung 9b der Fall ist. Dies ist besonders dann vorteilhaft, wenn die Membran 2 eine besonders geringe Stabilität aufweist, beispielsweise weil eine besonders dünne bzw. eine besonders flexible Membranfläche verwendet wird.

Es ist ersichtlich, dass der Deckel 11 derart geformt ist, dass der Reflektor 12 gemäß der zweiten Ausführungsform in den Deckel 11 integriert ist. Eine Innere Wandung des Deckels 11 ist somit als ein Reflektorelement 12 ausgeformt.

An dieser dritten Ausführungsform ist es besonders vorteilhaft, dass aufgrund der Anordnung der elektroakustischen Wandlers 3 am Rand der Membran 2 und der Befestigung der elektroakustischen Wandler am Rand des Leitungsträgers 4 ein Hebeleffekt entsteht, wodurch bereits durch eine geringe Bewegung des elektroakustischen Wandlers ein großer Schwingungshub der Membran 2 erzeugt wird. Somit wird eine Art Impedanztransformation erreicht und der Wirkungsgrad des Sensors steigt.

Auch wenn in dieser dritten Ausführungsform eine Membran 2 gleichbleibender Dicke gezeigt ist, ist es vorteilhaft, wenn die Membran 2 in einem Bereich über dem Leitungsträger 4 und zwischen den elektroakustischen Wandlern 3a, 3b eine verringerte Dicke aufweist. Die mehreren durch Abschnitte des Leiterträgers 4 umschlossenen Durchgangsöffnungen 9b sind zudem vorteilhaft, da somit ein Anschlag gebildet wird, und ein Überdehnen der Membran 2 bei extremen mechanischen Belastungen vermieden wird. Somit kann die Membran 2 besonders dünn ausgeführt werden.

Figur 4 zeigt einen akustischen Sensor 1 zum Aussenden und/oder Empfangen von akustischen Signalen zur Vermessung einer Fahrzeugumgebung gemäß einer vierten Ausführungsform. Die vierte Ausführungsform entspricht im Wesentlichen der ersten bis dritten Ausführungsform. In dieser vierten Ausführungsform weist der Leitungsträger 4 die Durchgangsöffnung 9b auf.

Die Membran liegt direkt auf einer Oberfläche des Leitungsträgers 4 auf. Der Leitungsträger 4 hat in dieser Ausführungsform die Form einer Lochscheibe. Die Membran 2 liegt auf dieser Lochscheibe derart auf, dass das Loch, also die Durchgangsöffnung 9b, überspannt wird. Durch die starre Ausführung des Leitungsträgers 4 wirkt dieser äquivalent wie der in Fig. 1 gezeigte Randbereich 20 der Membran 2 als Versteifungsrahmen der nicht schwingungsfähig ist. Somit beschränkt sich der Schwingungsbereich der Membran 2, das heißt, der Bereich, bei dem die Membran 2 als schallabstrahlende bzw. aufnehmende Fläche wirken kann, auf den Bereich der Durchgangsöffnung 9b.

Ist die Membran 2 unmittelbar auf der ihr zugewandten Seite des Leitungsträgers 4 mit diesem fest verbunden, so bestimmt die Form der Durchgangsöffnung 9b die effektiv schwingende Membranfläche. Neben der Resonanzfrequenz wird dadurch auch die Richtcharakteristik des Sensors bei einer Arbeitsfrequenz geprägt. Ist diese Öffnung beispielsweise eine Ellipse, variiert der Öffnungswinkel der Richtcharakteristik. Äquivalentes gilt für andere nichtrotationssymmetrische Formen.

In einer nicht dargestellten Ausprägung kann die Membran 2 beispielsweise durch Formgebung der der Membran 2 zugewandten Seite des Leitungsträgers 4 auf diesem so fixiert werden, dass die Auflagefläche der Membran 2 auf dem Leitungsträger 4 anders, insbesondere größer als die Querschnittsfläche der Durchgangsöffnung 9b geformt ist. Äquivalent zu den Verbindungspunkten 6a, 6b in Fig. 2 und in Fig. 3 begrenzen diese Auflagen den effektiv schwingenden Teil der Membran 2 und äquivalent bestimmt die Form der Auflagefläche die Richtcharakteristik und die Resonanzfrequenz des Sensors.

In der Durchgangsöffnung 9b ist der elektroakustische Wandler 3 angeordnet und mit der Membran 2 verbunden. Beispielsweise wird die Membran 2 formschlüssig und/oder durch dauerhafte Verbindungen wie Kleben bzw. Löten auf den Leitungsträger 4 aufgetragen. In der dargestellten Ausführung ist die Membran 2 auf der dem elektroakustischen Wandler 3 abgewandten Seite des Leitungsträgers 4 mittels eines Abdichtmittels auf dem Leitungsträger 4 fixiert, beispielsweise verlötet. Das Abdichtmittel ist somit eine alternative Ausführungsform des Dichtungselementes 8. Auf diese Weise kann auch optional zumindest ein elektrisches Potential des elektroakustischen Wandlers 3 an die Leitungen des Leitungsträgers 4 herangeführt werden.

Die erste Leiterbahn 5 und die zweite Leiterbahn 5b sind auf der ringförmigen Oberfläche des Leitungsträgers 4 angeordnet, die der Membran 2 abgewendet ist. Der elektroakustische Wandler 3 ist über jeweils eine Zuleitung, hier jeweils einen Draht 13, mit jeder der beiden elektrischen Leiterbahnen 5a, 5b verbunden.

Die Membran 2 weist im Bereich des elektroakustischen Wandlers 3 eine verringerte Dicke auf. Alternativ zu der in Fig. 4 dargestellten Lösung kann sie in diesem Bereich auch eine gleichbleibende Dicke aufweisen. In dieser vierten Ausführungsform ist optional ein Dämmmaterial 14 in einen Innenbereich des akustischen Sensors 1 eingebracht, der auf einer der Membran 2 abgewandten Seite des elektroakustischen Wandlers 3 liegt, um einen rückwärtig abgestrahlten Schall des elektroakustischen Wandlers 3 zu minimieren und das Ausschwingen des Wandler nach einer Anregung zu verkürzen. Das Dämmmaterial 14 kann den Innenbereich ganz oder nur abschnittsweise ausfüllen.

Ein solcher akustischer Sensor 1 gemäß der vierten Ausführungsform ist vorteilhaft, da in einem solchen Aufbau bereits alle akustisch relevanten Komponenten miteinander in einer festen Beziehung stehen, ohne dass teure elektronische Bauelemente zum Einsatz kommen. Dies ermöglicht eine besonders günstige Herstellung und auch Entsorgung.

Optional kann der Leitungsträger 4 mit dahinterliegenden Einheiten 19, insbesondere elektrischen Schaltungen, mit beispielsweise Steckverbindungen 22 oder andere Kontaktierungen verbunden werden. Alternativ oder zusätzlich können durch den Leitungsträger 4 auch die elektrischen Bauelemente 16 mitgetragen werden. Beispielsweise können sich Vorverstärker direkt auf dem Leitungsträger 4 befinden, um negative Einstrahlungseffekte zu minimieren.

Aus Figur 4 wird ersichtlich, dass der Leitungsträger 4 allein aufgrund seiner Dicke das die Form des Sensors bestimmende Element ist. So kann durch die Formgebung des die Membran 2 tragenden Teils des Leitungsträgers 4 der Oberflächenverlauf der Membran insbesondere abseits des effektiv schwingenden Bereichs der Membran 2 gestaltet und den Designwünschen der Kunden angepasst werden. So muss diese Fläche nicht wie beim Stand der Technik her zwangsläufig eine Ebene bilden, sondern kann beispielsweise der Oberflächenkontur der durch die Fahrzeugkomponente 30 bestimmten Sensorumgebung angepasst werden.

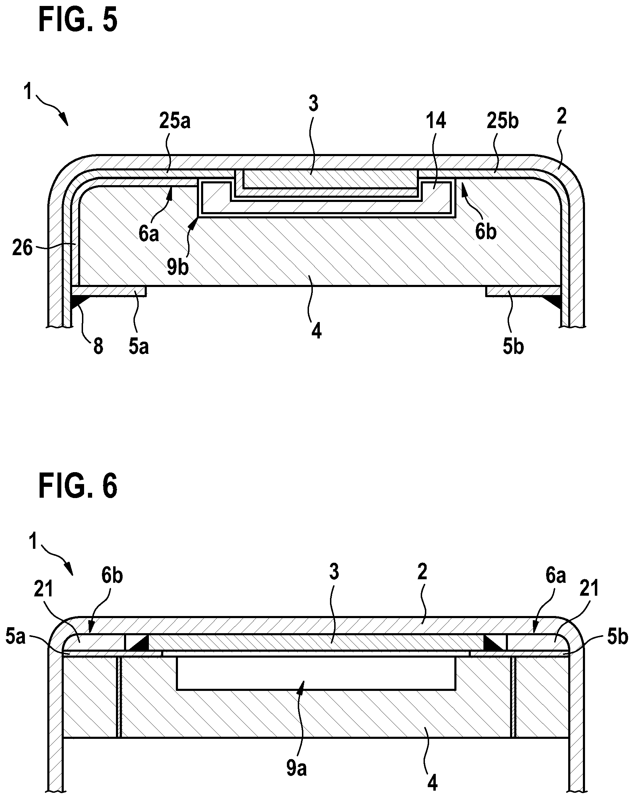

Figur 5 zeigt einen akustischen Sensor 1 zum Aussenden und/oder Empfangen von akustischen Signalen gemäß einer fünften Ausführungsform. Auch bei dem in Figur 5 dargestellten Aufbau bekommt die dünne Membran 2 durch Auflage auf dem Leitungsträger 4 Stabilität und Halt. Im Gegensatz zur vorstehenden Figur wird in Figur 5 der elektroakustische Wandler 3 durch Leitungen kontaktiert, deren räumlicher Verlauf vom Verlauf der Membran 2 auf dem Leitungsträger 4 bestimmt wird. Auf diese Weise kann auf eine Öffnung zur Kontaktierung des elektroakustischen Wandlers 3 mittels beispielsweise Drähten 13 verzichtet werden. So bekommt der Sensor eine höhere Stabilität und optional kann eine Senke 9 zur Schallführung und/oder als mechanischen Anschlag für den elektroakustischen Wandler verwendet werden. Optional kann zumindest die Membran 2 und/oder der elektroakustische Wandler 3 mit einem Dämmstoff 14, also akustisch dämmenden Material, zumindest abschnittsweise belegt sein.

Beispielsweise wirkt die Membran 2 in der dargestellten Ausführungsform ähnlich einer flexiblen Leiterplatte als flexibler Leiterträger. So kann die Membran 2 elektrisch nichtleitend ausgeführt sein und auf ihr verlaufen elektrisch leitende Schichten 25a, 25b, die beispielsweise seitlich an den elektroakustischen Wandler 3 herangeführt sind und diesen dort seitlich beispielsweise mittels Lötverbindungen kontaktieren. Bedarfsweise schützt eine elektrisch nichtleitende Schicht 26 zumindest eine elektrisch leitende Schicht vor ungewollten elektrischen Verbindungen mit anderen Bauteilen. Auf diese Weise kann die Membran 2 in Funktionseinheit zur Kontaktierung verwendet werden. In bevorzugter Ausführungsformen ist dazu zumindest im Bereich des isolierten geführten Leiters der Leitungsträger 4 gegenüber der Membran 2 isoliert und hinreichend beabstandet, um diesen mechanisch nicht zu schädigen.

Im dargestellten Beispiel werden die leitenden Schichten 25a, 25b auf der dem elektrischen Wandler 3 abgewandten Seite des Leitungsträgers 4 auf dort vorhandene Leiterbahnen 5a, 5b beispielsweise via Löten umkontaktiert.

Äquivalent kann die in Figur 2 gezeigte Membran 2 als ein flach verlaufender, flexibler Leiterträger mit verwendet werden indem die dort dargestellten Verbindungspunkte 6a, 6b zur Kontaktierung und elektrischen Anbindung des elektroakustischen Wandlers 3 genutzt werden. Dadurch ist es nicht mehr zwingend erforderlich, den Draht 13 via Öffnung an den elektroakustischen Wandler 3 heran zu führen.

Figur 6 zeigt einen akustischen Sensor 1 zum Aussenden und/oder Empfangen von akustischen Signalen gemäß einer sechsten Ausführungsform. Die sechste Ausführungsform entspricht im Wesentlichen der vierten Ausführungsform, zeigt jedoch eine alternative Kontaktierung des elektroakustischen Wandlers 3. So liegt in dieser fünften Ausführungsform der elektroakustische Wandler 3 direkt auf der ersten Leiterbahn 5a und der zweiten Leiterbahn 5b auf, die sich in diesem Fall auf der dem elektroakustischen Wandler 3 zugewandten Seite des Leitungsträgers 4 befinden. Der elektroakustische Wandler 3 ist dort beispielsweise mittels einer seitlichen Kontaktierung elektrisch und mechanisch mit dem Leitungsträger 4 verbunden.

Die gepunktete Begrenzung im Leiterträger 4 unter dem elektroakustischen Wandler 3 deutet an, dass es dort vorstehende genannte und erläuterte verschiedene Gestaltungsformen des Leiterträgers 4 gibt, wie beispielsweise das Einfügen einer Senke 9 oder einer Durchgangsöffnung 9b, die hier nicht erneut erörtert werden. In der dargestellten Version ist die Membran 2 abseits des elektroakustischen Wandlers 3 durch Abstandshalter 21 stabilisiert und gemäß dem Abstand des elektroakustischen Wandlers 3 bezüglich der darunterliegenden Oberfläche des Leitungsträgers 4 fixiert. In einer alternativen Ausprägung kann der Abstandshalter 21 jedoch ein separates Bauteil sein, insbesondere dann, wenn dieser aus anderem Material als die Membran 3 besteht. So kann der Abstandshalter 21 zumindest abschnittsweise aus einem schwingungsdämpfenden Material bestehen.

Es ist für den Fachmann ersichtlich, dass eine Vielzahl von Kontaktierungen des elektroakustischen Wandlers 3 möglich ist. Explizit sei hier darauf verwiesen, dass ebenfalls eine Kontaktierung des elektroakustischen Wandlers 3 über eine Membran 2 mit leitfähigen Bereichen möglich ist, als auch jegliche Kombination der zuvor beschriebenen Kontaktierungen.

Es sei explizit darauf verwiesen, dass alle beschriebenen Ausführungsformen des erfindungsgemäßen akustischen Sensors 1 auch dahingehend erweitert werden können, dass ein sogenannter Sensor Array gebildet wird. Dazu ist es lediglich notwendig, den Leitungsträger 4 entsprechend zu erweitern, dass ein zweiter elektroakustischer Wandler neben diesem angeordnet werden kann, wobei ein solcher Sensor Array eine gemeinsame Membran 2 aufweist, die durch mehrere elektroakustische Wandler 3 angeregt wird. Die Membran wird jedoch von einem einzelnen Kontaktträger 4 aufgespannt.

Nebst obenstehender Offenbarung wird explizit auf die Offenbarung der Figuren 1 bis 6 verwiesen.

## Patentansprüche

1. Akustischer Sensor (1) zum Aussenden und/oder Empfangen von akustischen Signalen, insbesondere Ultraschallsignalen, umfassend:
- eine Membran (2),
- einen elektroakustischen Wandler (3), der dazu eingerichtet ist, die Membran (2) zu einer Schwingung anzuregen, und
- einen Leitungsträger (4), auf dessen Oberfläche zumindest eine elektrische Leiterbahn (5a, 5b) angeordnet ist,
wobei die Membran (2) an zumindest zwei Verbindungspunkten (6a, 6b) mit dem Leitungsträger (4) verbunden ist und von dem Leitungsträger (4) aufgespannt ist, wobei der Leitungsträger (4) zumindest abschnittsweise aus einem elektrisch leitfähigen Material besteht, wobei zwischen der zumindest einen elektrischen Leiterbahn (5a, 5b) und dem elektrisch leitenden Material des Leitungsträgers (4) eine Isolationsschicht angeordnet ist.

2. Akustischer Sensor (1) gemäß Anspruch 1, **dadurch gekennzeichnet, dass** der Schallsensor (1) dazu eingerichtet ist, über den Leitungsträger (4) an einer Fahrzeugkomponente (30) fixiert zu werden.

3. Akustischer Sensor (1) gemäß einem der vorhergehenden Ansprüche, **dadurch gekennzeichnet, dass** die Membran (2) über ein Dichtungselement (8) mit dem Leitungsträger (4) verbunden ist.

4. Akustischer Sensor (1) gemäß einem der vorhergehenden Ansprüche, **dadurch gekennzeichnet, dass** der Leitungsträger (4) in einem Bereich, in dem der elektroakustische Wandler (3) über dem Leitungsträger (4) angeordnet ist, eine Senke (9b) oder eine Durchgangsöffnung (9a) aufweist.

5. Akustischer Sensor (1) gemäß einem der vorhergehenden Ansprüche, **dadurch gekennzeichnet, dass** der elektroakustische Wandler (3) über die zumindest eine elektrische Leiterbahn (5a, 5b) elektrisch kontaktiert ist.

6. Akustischer Sensor (1) gemäß einem der vorhergehenden Ansprüche, **dadurch gekennzeichnet, dass** die Membran (2) einen Oberflächenbereich aufweist, der elektrisch leitfähig ist und der elektroakustische Wandler (3) über den elektrisch leitfähigen Oberflächenbereich der Membran (2) kontaktiert ist.

7. Akustischer Sensor (1) gemäß dem vorhergehenden Anspruch 6, **dadurch gekennzeichnet, dass** der elektrisch leitfähige Oberflächenbereich der Membran (2) über einen der Verbindungspunkte (6a, 6b) elektrisch kontaktiert ist.

8. Ultraschallsensor (1) gemäß einem der vorhergehenden Ansprüche, **dadurch gekennzeichnet, dass** der elektroakustische Wandler (3) direkt mit der zumindest einen elektrischen Leiterbahn (5a, 5b) verbunden ist.

9. Ultraschallsensor (1) gemäß einem der vorhergehenden Ansprüche, **dadurch gekennzeichnet, dass** auf einer Oberfläche des Leitungsträgers, die abseits der Membran (2) liegt, eine Dämmschicht (10) aufgebracht ist.

## Claims

1. Acoustic sensor (1) for emitting and/or receiving acoustic signals, in particular ultrasonic signals, comprising:
- a diaphragm (2),
- an electroacoustic transducer (3) which is set up to excite the diaphragm (2) to vibrate, and
- a conductor carrier (4), on the surface of which at least one electrical conductor track (5a, 5b) is arranged,
wherein the diaphragm (2) is connected to the conductor carrier (4) at at least two connection points (6a, 6b) and is stretched by the conductor carrier (4), wherein the conductor carrier (4) consists of an electrically conductive material at least in sections, wherein an insulation layer is arranged between the at least one electrical conductor track (5a, 5b) and the electrically conductive material of the conductor carrier (4).

2. Acoustic sensor (1) according to Claim 1,
**characterized in that** the sound sensor (1) is set up to be fixed to a vehicle component (30) via the conductor carrier (4).

3. Acoustic sensor (1) according to one of the preceding claims,
**characterized in that** the diaphragm (2) is connected to the conductor carrier (4) via a sealing element (8) .

4. Acoustic sensor (1) according to one of the preceding claims,
**characterized in that** the conductor carrier (4) has a depression (9b) or a passage opening (9a) in a region in which the electroacoustic transducer (3) is arranged above the conductor carrier (4).

5. Acoustic sensor (1) according to one of the preceding claims,
**characterized in that** electrical contact is made with the electroacoustic transducer (3) via the at least one electrical conductor track (5a, 5b).

6. Acoustic sensor (1) according to one of the preceding claims,
**characterized in that** the diaphragm (2) has a surface region which is electrically conductive, and contact is made with the electroacoustic transducer (3) via the electrically conductive surface region of the diaphragm (2).

7. Acoustic sensor (1) according to the preceding Claim 6,
**characterized in that** electrical contact is made with the electrically conductive surface region of the diaphragm (2) via one of the connection points (6a, 6b).

8. Ultrasonic sensor (1) according to one of the preceding claims, **characterized in that** the electroacoustic transducer (3) is directly connected to the at least one electrical conductor track (5a, 5b) .

9. Ultrasonic sensor (1) according to one of the preceding claims, **characterized in that** an insulating layer (10) is applied to a surface of the conductor carrier which is remote from the diaphragm (2) .

## Revendications

1. Capteur acoustique (1) destiné à émettre et/ou à recevoir des signaux acoustiques, notamment des signaux ultrasonores, comprenant :
- une membrane (2),
- un transducteur électroacoustique (3), lequel est conçu pour exciter la membrane (2) en une oscillation et
- un porte-ligne (4) sur la surface duquel est disposée au moins une piste conductrice électrique (5a, 5b),
la membrane (2) étant reliée au porte-ligne (4) en au moins deux points de liaison (6a, 6b) et étant tendue par le porte-ligne (4), le porte-ligne (4) étant constitué, au moins dans certaines portions, d'un matériau électriquement conducteur, une couche isolante étant disposée entre l'au moins une piste conductrice électrique (5a, 5b) et le matériau électriquement conducteur du porte-ligne (4).

2. Capteur acoustique (1) selon la revendication 1, **caractérisé en ce que** le capteur acoustique (1) est conçu pour être fixé à un composant de véhicule (30) par le biais du porte-ligne (4).

3. Capteur acoustique (1) selon l'une des revendications précédentes, **caractérisé en ce que** la membrane (2) est reliée au porte-ligne (4) par le biais d'un élément d'étanchéité (8).

4. Capteur acoustique (1) selon l'une des revendications précédentes, **caractérisé en ce que** le porte-ligne (4) possède une cuvette (9b) ou une ouverture de passage (9a) dans une zone dans laquelle le transducteur électroacoustique (3) est disposé au-dessus du porte-ligne (4).

5. Capteur acoustique (1) selon l'une des revendications précédentes, **caractérisé en ce que** le contact électrique avec le transducteur électroacoustique (3) est établi par le biais de l'au moins une piste conductrice électrique (5a, 5b).

6. Capteur acoustique (1) selon l'une des revendications précédentes, **caractérisé en ce que** la membrane (2) possède une zone de surface qui est électriquement conductrice et le contact électrique avec le transducteur électroacoustique (3) est établi par le biais de la zone de surface électriquement conductrice de la membrane (2).

7. Capteur acoustique (1) selon la revendication précédente 6, **caractérisé en ce que** le contact électrique avec la zone de surface électriquement conductrice de la membrane (2) est établi par le biais de l'un des points de liaison (6a, 6b).

8. Capteur à ultrasons (1) selon l'une des revendications précédentes, **caractérisé en ce que** le transducteur électroacoustique (3) est relié directement à l'au moins une piste conductrice électrique (5a, 5b).

9. Capteur à ultrasons (1) selon l'une des revendications précédentes, **caractérisé en ce qu'**une couche isolante (10) est appliquée sur une surface du porte-ligne qui est à l'écart de la membrane (2).
